# EUROPÄISCHE PATENTSCHRIFT

(11) **EP 3 868 846 B1**
(45) Veröffentlichungstag und Bekanntmachung des Hinweises auf die Patenterteilung: **02.11.2022**
(21) Anmeldenummer: 20305165.1
(22) Anmeldetag: 20.02.2020
(51) Int. Cl.: C09D 183/14, C08G 77/58

(54) **DEKORATIVE UND SCHÜTZENDE BESCHICHTUNGSZUSAMMENSETZUNG FÜR METALL-, GLAS- UND KUNSTSTOFF-SUBSTRATE**
DECORATIVE AND PROTECTIVE COATING COMPOSITION FOR METAL, GLASS AND PLASTIC SUBSTRATES
COMPOSITION DE REVÊTEMENT DÉCORATIVE ET PROTECTRICE POUR SUBSTRATS EN MÉTAL, VERRE ET MATIÈRE PLASTIQUE

(43) Veröffentlichungstag der Anmeldung: 25.08.2021
(73) Patentinhaber: EPG-F, 57450 Henriville (FR)
(72) Erfinder: SCHACKMANN, Billy, 57600 Forbach (FR)
(74) Vertreter: Rippel, Hans Christoph

(56) Entgegenhaltungen:
- WO-A1-2010/062436
- FR-A1- 2 866 029
- JP-A- 2010 095 673
- US-A- 5 238 708
- US-A1- 2005 244 658

## Beschreibung

Die Erfindung betrifft eine anorganisch-organische Beschichtungszusammensetzung, insbesondere für Metall-, Glas- und Kunststoff-Substrate, Verfahren zur Beschichtung von Substraten mit der erfindungsgemäßen Beschichtungszusammensetzung, sowie Substrate, die mit der erfindungsgemäßen Beschichtungszusammensetzung beschichtet sind.

Gemäß dem Stand der Technik werden heutzutage unterschiedliche Verfahren wie Pulverbeschichtungen und insbesondere für Aluminiumwerkstoffe Eloxalschichten zur Herstellung von dekorativen und/oder schützenden Oberflächen für Metall-, Glas- und Kunststoff-Substrate verwendet.

Pulverbeschichtungen erfordern in der Regel mehrere Vorbehandlungsschritte. Dazu gehören neben der Entfernung von Oberflächenrückständen (Farben, Fette) auch das Reinigen und Auftragen mehrerer Umwandlungsschichten. Diese dienen dazu, eine bessere Übereinstimmung zwischen der Oberfläche und der Farbe zu erreichen. Reinigungsmittel auf Basis von Ethanol oder Aceton, die bei Raumtemperatur verdampfen und keine Rückstände auf der Oberfläche hinterlassen, werden zur Reinigung verwendet. Bei einigen Grundwerkstoffen muss eine Vorbehandlung zum Korrosionsschutz folgen. Eine unzureichende Oberflächenvorbereitung kann zu einer Verringerung der Haftung oder sogar zu spontanem Ablösen oder zu Kratern im Farbfilm führen. Typische Verfahren im Bereich der Pulverbeschichtung sind Phosphatierung auf Stahl, Färben auf verzinktem Stahl, Chromatierung sowie Eloxieren oder Eloxieren auf Aluminium. Die hergestellten Pulverbeschichtungsschichten weisen in der Regel Schichtdicken zwischen 60 und 120 µm auf. Je nach Anwendung und Oberflächeneigenschaften kann die Schichtdicke auch oberhalb oder unterhalb dieses Bereichs liegen.

Die zum Teil komplexen Vorbehandlungsschritte sind kostenintensiv und sollten daher vermieden werden. Es besteht allerdings die Gefahr, dass Haftungsverluste auftreten, wenn die Vorbehandlung nicht ordnungsgemäß durchgeführt wird und damit verbunden Ausschuss auftritt. Weitere Nachteile von Pulverbeschichtungen im funktionalen Dekorativbereich sind die relativ hohen Schichtdicken, die zu einem kunststoffähnlichen Erscheinungsbild führen können und die Haptik beeinflussen. Daneben weisen Pulverbeschichtungen für bestimmte Anwendungsbereiche eine unzureichende chemische Beständigkeit und Korrosionsbeständigkeit sowie eine unzureichende Kratz- und Abriebfestigkeit auf.

Um farbige Oberflächen auf Aluminium und seinen Legierungen zu erhalten, wird häufig der Eloxalprozess verwendet. Je nach Produktionsbedingungen und Aluminiumlegierungen sind verschiedene Arten eloxierter Schichten bekannt. Technische eloxierte Beschichtungen werden bei Raumtemperatur und Stromdichten von 1,5 A / dm2 in einem Schwefelsäureelektrolyten hergestellt. Eloxierte Oberflächen sind transparent und schützen das Aluminium im Vergleich zu unbehandelten Oberflächen bis zu einem gewissen Grad vor Korrosion und Kratzern. Hart eloxierte Schichten werden bei Temperaturen um 0°C mit höheren Stromdichten von 2-5 A / dm2 in gemischten Schwefelsäureelektrolyten hergestellt. Im Vergleich zur technischen Eloxierung zeichnen sie sich durch eine besonders erhöhte Abrieb- und Kratzfestigkeit aus. Eine dritte Methode ist die Glossel-Eloxierungsmethode. Dabei wird das Metall vor der technischen Eloxierung durch Elektropolieren poliert und anschließend in einem Schwefelsäureelektrolyten eloxiert. Eloxierte Schichten haben eine poröse Struktur, Farbstoffe oder andere Substanzen können optional in diese Poren eingebettet werden. Die Öffnungen der Poren können durch Komprimieren in heißem Wasser geschlossen werden. Hier bildet sich Aluminiumoxidhydrat (Boehmit) in der Pore. Die Eloxierung verbessert die Korrosionsbeständigkeit im Vergleich zum blanken Aluminium, aber ein Nachteil der eloxierten Schichten ist der Mangel an pH-Stabilität (zwischen pH 4 und 9). Selbstverständlich müssen bei pH-Werten außerhalb dieses Bereichs entweder das blanke Aluminium oder die eloxierte Schicht durch eine darüberliegende Schicht geschützt werden. Um farbiges eloxiertes Aluminium zu erhalten, werden verschiedene Verfahren verwendet.

Bei der Färbung mit organischen Farbstoffen wird das Aluminium nach der Eloxierung in heiße Farbstofflösung getaucht und anschließend abgespült. Beim Färben mit dieser Methode akkumulieren die Farbstoffmoleküle überwiegend in den oberen Bereichen der Poren der eloxierten Schicht und bilden Bindungen mit der Oxidschicht. Je mehr Farbstoff es in der Lösung gibt, desto mehr akkumulieren sie in der Oxidschicht. Bei anorganischen Farbstoffen nach der Eloxierung wird das Aluminium neutralisiert, gespült und in Farbbädern mit Metallsalzlösungen gefärbt. Die Ionen der Lösung sammeln sich in den Poren der eloxierten Schicht an und werden zu einem Feststoff.

Die elektrolytische Färbung erfolgt mit Wechselspannung. Der Elektrolyt enthält ein färbendes Metallsalz. Die Dauer der Elektrolyse hängt von der gewünschten Farbtiefe ab. Die Metallionen dringen tief in die Poren der Schicht ein. Die Poren, die teilweise mit Metall gefüllt sind, verursachen nun durch Absorptions- und Streueffekte eine lichtbehaftete Färbung.

Bei dekorativen farbigen Aluminiumelementen ist der Eloxierungsprozess auf eine bestimmte Anzahl von Farben beschränkt und ein Hauptnachteil ist, dass nicht alle Aluminiumarten mit diesem Verfahren eingefärbt werden können und dass die oben genannten Verfahren meist nicht zu einer homogenen Färbung führen. Zudem können nicht alle Aluminiumlegierungen und Halbzeuge über diese aufwendigen Verfahren gefärbt werden.

Zur Vermeidung dieser Probleme mit den bekannten und heute noch überwiegend verwendeten Verfahren wurde bereits der Einsatz von hybriden, d.h. anorganischorganischen Sol-Gel-Materialien vorgeschlagen.

Die deutsche Offenlegungsschrift DE 10 2007 003761 A1 offenbart Materialien und Verfahren zur Beschichtung von Substraten mit heterogenen Oberflächeneigenschaften, wobei Epoxid- oder Isocyanat-funktionalisierte Alkoxysilane eingesetzt werden.

DE 43 38 361 A1 offenbart ein Verfahren zur Herstellung von Zusammensetzungen auf der Basis von Epoxidgruppen-haltigen Silanen. Die offenbarten Beschichtungszusammensetzungen enthalten zwingend Nanopartikel.

DE 10 2012 022731 offenbart hochabriebfeste Antikalkschichten mit hoher chemischer Beständigkeit.

DE 10 2013 017217 A1 offenbart beschichtete optische Formkörper.

In der WO 2017/067666 ist ein Verfahren zur Herstellung eines beschichteten Leichtmetall- insbesondere Aluminiumsubstrats offenbart, enthaltend die Schritte a) nasschemisches Aufbringen einer Beschichtungszusammensetzung auf das Leichtmetallsubstrat und b) thermisches Aushärten der Beschichtungsmasse, wobei die Beschichtungszusammensetzung ein Sol-Gel-Material enthält, dem zwingend Komplexbildner aus der Gruppe der 1,3-Dicarbonylverbindungen zugesetzt sind.

Das Dokument JP2010095673 offenbart Beschichtungen, die ein Hybridmaterial und ein Polyurethan enthalten. Das Hybridmaterial weist keine Epoxygruppe auf und das Polyurethan wird nicht in situ vernetzt.

Obwohl mit den bekannten Systemen bereits gute Ergebnisse erzielt werden, bleibt doch weiterhin Raum für Verbesserungen im Hinblick auf die vielfältigen Anforderungen an solche Beschichtungssysteme:
Die Beschichtungssysteme und Verfahren zur Herstellung von Beschichtungen zur Verfügung müssen geeignet sein, dekorative Oberflächen zu schaffen, um Pulverbeschichtungen und insbesondere für Aluminium und seine Legierungen Eloxalschichten zu ersetzen. Sie sollten es ermöglichen, ohne Vorbehandlungs- oder Grundierungsschichten aufgetragen zu werden, und geeignet sein, Spuren von Vorbehandlungsprozessen wie Schleifen oder "Trovalisieren" abzudecken. Für spezielle Anwendung sollten die Materialien gegen Handschweiß und UV-Strahlung stabil sein und eine hohe Kratz- und Abriebstabilität aufweisen. Daneben sollte eine hohe Korrosionsbeständigkeit vorhanden sein, es sollte eine breite Palette von Farben zugänglich sein, wobei die oben genannten Eigenschaften erhalten bleiben und eine hohe Farbhomogenität sichergestellt sein muss.

Es wurde nun überraschend gefunden, dass die genannten Anforderungen in einem hohen Maße von einer Beschichtungszusammensetzung erfüllt wird, die ein spezielles anorganisch-organisches Hybridmaterial enthält, in dem mindestens ein Titanalkoxid enthalten ist.

Gegenstand der Erfindung ist daher eine Beschichtungszusammensetzung, enthaltend
I. ein anorganisch-organisches Hybridmaterial, erhalten aus
   A1. einem oder mehreren teilhydrolysierten Alkoxysilanen der Formel (la),

      (R¹O)ₙSiR²₃₋ₙR³ (la)

      wobei die Symbole und Indizes folgende Bedeutungen haben:
      - R¹: ist C₁-C₆-Alkyl oder C₁-C₁₀-Aryl,
      - R²: ist C₁-C₄-Alkyl, C₂-C₄-Alkenyl oder C₂-C₄-Alkinyl, C₆-C₁₀-Aryl, C₆-C₁₀-Aralkyl oder C₆-C₁₀-Alkaryl,
      - R³: ist eine epoxyfunktionale Gruppe und
      - n: ist 1, 2 oder 3;
   A2. gegebenenfalls einem oder mehreren teilhydrolysierten Alkoxysilanen der Formel (Ib),

      (R⁴O)ₙSiR⁵₄₋ₙ (Ib)

      wobei die Symbole und Indizes folgende Bedeutungen haben:
      - R⁴: ist C₁-C₆-Alkyl oder C₆-C₁₀-Aryl,
      - R⁵: ist C₁-C₁₀-Alkyl, C₂-C₄-Alkenyl oder C₂-C₄-Alkinyl, C₆-C₁₀-Aryl, C₆-C₁₀-Aralkyl oder C₆-C₁₀-Alkaryl, wobei die genannten Reste gegebenenfalls mit einer oder mehreren, bevorzugt einer, Aminogruppen substituiert sind und
      - n: ist 1, 2, 3 oder 4;
   B1. einem oder mehreren Metallalkoxiden der Formel (IIa),

      Ti(OR⁶)₄ (IIa)

      wobei die Symbole folgende Bedeutungen haben:
      - R⁶: ist C₁-C₆-Alkyl oder C₆-C₁₀-Aryl;
   B2. gegebenenfalls einem oder mehreren Metallalkoxiden der Formel (IIb),

      M^{+(4-m)}(OR⁷)₄₋ₘ (IIb)

      wobei die Symbole und Indizes folgende Bedeutungen haben:
      - M: ist ein Metall der 3. oder 4. Haupt- oder Nebengruppe mit EN < 1,5 mit Ausnahme von Ti,
      - R⁷: ist C₁-C₆-Alkyl, oder C₆-C₁₀-Aryl und
      - m: ist 0 oder 1, bevorzugt 1,
      wobei das molare Verhältnis von Si in Komponente A1 und A2 zu Ti in Komponente B1 1 - 20 : 1 beträgt;
   C. einem oder mehreren oligomeren oder polymeren Polyolen;
   D. einem oder mehreren geblockten, gegebenenfalls modifizierten Polyisocyanaten und
   E. gegebenenfalls einem oder mehreren Monomeren, Oligomeren und/oder Polymeren, die ein oder mehrere, vorzugsweise mindestens zwei, freie Epoxygruppen aufweisen;
II. gegebenenfalls ein oder mehrere Farbmittel und
III. gegebenenfalls ein oder mehrere Zusatzstoffe.

Weiterhin Gegenstand der Erfindung ist ein Verfahren zur Herstellung eines beschichteten Substrats, enthaltend die Schritte
a) nasschemisches Aufbringen der erfindungsgemäßen Beschichtungszusammensetzung auf das Substrat und
b) thermisches Aushärten der Beschichtungszusammensetzung.

Weiterhin Gegenstand der Erfindung ist die Verwendung der erfindungsgemäßen Beschichtungszusammensetzung zur Beschichtung von Substraten, vorzugsweise Metall-, Glas- und Kunststoffsubstraten, besonders bevorzugt von Leichtmetallsubstraten, insbesondere Aluminiumsubstraten.

Ebenfalls Gegenstand der Erfindung ist ein Substrat, vorzugsweise ein Metall-, Glas- und Kunststoffsubstrat, besonders bevorzugt ein Leichtmetallsubstrat, insbesondere ein Aluminiumsubstrat, beschichtet mit einer erfindungsgemäßen Beschichtungszusammensetzung.

Die mit der Hilfe der erfindungsgemäßen Beschichtungszusammensetzung hergestellten beschichteten Substrate, insbesondere dekorative Metall- Kunststoff- und Glassubstrate weisen neben einem hervorragenden optischen Erscheinungsbild eine sehr gute Korrosionsbeständigkeit, UV-Stabilität und Kratzfestigkeit auf.

Durch den Einsatz der Titankomponente kann eine hohe Hydrolyserate des Alkoxysilans erreicht werden (z. B. im Vergleich zur Verwendung von Al-Alkoxiden). Durch die Tetravalenz des Titans im Vergleich zur Trivalenz von Aluminium kann im Endprodukt eine höhere Verdichtung erreicht werden. Ein weiterer Effekt der Verwendung der Titanverbindung ist ein geringerer Wassergehalt nach der Reaktion und eine geringe Trübung in der Beschichtung.

Damit erweitert die Erfindung die Möglichkeiten, das kostenintensive Eloxalverfahren zu vermeiden oder zu ersetzen, den Einsatz alternativer Legierungen sowie die Verwendung von Fräß,- Guss-, Druckguss- und Plattenmaterialien. Des Weiteren zeichnen sich die erfindungsgemäßen Beschichtungsmaterialien durch eine verbesserte Prozessstabilität aus.

Erfindungsgemäß können insbesondere Beschichtungen erhalten werden, die sich durch das folgende Eigenschaftsprofil auszeichnen:
- Haftung: Gitterschnitt (DIN EN ISO 2409) GT: 0,
- Haftung nach Kochtest: (Verweilzeit 2 h im kochenden VE Wasser) GT: 1;
- Korrosionsbeständigkeit: NSS-Test (DIN EN ISO 9227) 240 h;
- UV-Bewitterung:
- SUN-Test Innenbereich (DIN EN ISO 4892-2 Verfahren B6) 250h,
- SUN-Test Außenbereich (DIN EN ISO 4892-2 Verfahren A2) 500h;
- Abrieb-Beständigkeit:
- Abriebprüfung (DIN EN ISO 60068-2-70) 50.000 Zyklen< 20 mm²;
- Handschweiß-Test 40.000 Zyklen;
- Crockmeter Test mit 20 000 und 50 000 Zyklen mit Baumwolltuch erfolgreich (ohne Glanzverlust und Farbveränderung);
- Oberflächenhärte:
- Kratzbeständigkeit (DIN EN ISO 1518): 8 to 10N.

Die erfindungsgemäße Beschichtungszusammensetzung enthält neben I. einem anorganischen-organischen Hybridmaterial, II. gegebenenfalls einem oder mehreren Farbmitteln und III. gegebenenfalls einem oder mehreren Zusatzstoffen weiterhin Verdünnungsmittel, das sich aus dem synthesebedingten, von der Teilhydrolyse herrührenden Anteil an Alkohol(en) sowie gegebenenfalls einem oder mehreren weiteren Verdünnungsmitteln zusammensetzt. Vorzugsweise besteht die erfindungsgemäße Beschichtungszusammensetzung aus den Komponenten I bis III, sowie Verdünnungsmittel, das neben dem synthesebedingten, von der Teilhydrolyse herrührenden Anteil an Alkohol(en) gegebenenfalls ein oder mehrere weitere Verdünnungsmittel enthält.

Das anorganische-organische Hybridmaterial ist ein in-situ hergestelltes Block-Präpolymer, das aus der Kondensation hydrolysierbarer Alkoxysilane entsteht. Es wird erhalten aus den Komponenten A1. einem oder mehreren teilhydrolysierten Alkoxysilanen der Formel (la), A2. gegebenenfalls einem oder mehreren teilhydrolysierten Alkoxysilanen der Formel (Ib), B1. einem oder mehreren Metallalkoxiden der Formel (IIa), B2. gegebenenfalls einem oder mehreren Metallalkoxiden der Formel (IIb), C. einem oder mehreren oligomeren oder polymeren Polyolen, D. einem oder mehreren geblockten, gegebenenfalls modifizierten Polyisocyanaten sowie E. gegebenenfalls einem oder mehreren Monomeren, Oligomeren und/oder Polymeren, die eine oder mehrere, bevorzugt mindestens zwei, freie Epoxygruppen aufweisen.

### Komponente A1

In der Formel (la) des teilhydrolysierten Alkoxysilans haben die Symbole und Indizes bevorzugt folgende Bedeutungen:
- R¹: ist bevorzugt Methyl, Ethyl, Propyl oder Butyl, wobei die letzten beiden Gruppen unverzweigt oder verzweigt, vorzugsweise unverzweigt sind, besonders bevorzugt Methyl oder Ethyl.
- n: ist bevorzugt 2 oder 3, bevorzugt 3.
- R²: ist bevorzugt C₁-C₄-Alkyl, insbesondere Methyl oder Ethyl.
- R³: ist bevorzugt eine Epoxyalkylgruppe, deren Alkylgruppe mit einem oder mehreren Heteroatomen, wie Sauerstoff oder Stickstoff, unterbrochen sein kann. Die Alkylgruppe kann zudem mit einem oder mehreren Substituenten, wie beispielsweise Hydroxy, Amino, Carboxy oder Aryl, substituiert sein. Die Alkylgruppe kann geradkettig, verzweigt und/oder ringförmig vorliegen. Bevorzugte Alkylgruppen enthalten 1 bis 20, insbesondere 1 bis 10 Kohlenstoffatome außerhalb des Oxiranrings. Besonders bevorzugt wird die Alkylgruppe von einem Sauerstoffatom unterbrochen. Eine besonders bevorzugte epoxyfunktionelle Gruppe ist die Glycidyloxypropylgruppe.

Als epoxymodifizierte Alkoxysilane eignen sich beispielsweise 3-Glycidyloxypropyltrimethoxysilan, 3-Glycidyloxypropyltriethoxysilan, 3,4-Epoxybutyltrimethoxysilan, 3,4-Epoxybutyltriethoxysilan, 2-(3,4-Epoxycyclohexyl)ethyltrimethoxysilan, 2-(3,4-Epoxycyclohexyl)ethyltriethoxysilan, 3-Glycidyloxypropyldimethylethoxysilan, 3-Glycidyloxypropyldimethylmethoxysilan, 3-Glycidyloxypropylmethyldiethoxysilan und 3-Glycidyloxypropylmethyldimethoxysilan.

"Teillhydrolysiert" bedeutet im Sinne der Erfindung ein Verhältnis der nicht hydrolysierten Gruppen zu hydrolysierten Gruppen (ROR Verhältnis) von 0,33 bis 0,8.

Bevorzugte Molverhältnisse sind für die Teilhydrolyse: Silan der allgemeinen Formel (la) zu Wasser im Allgemeinen 7,5 : 1 - 1 : 1,5, bevorzugt 5 : 1 - 1 : 1, besonders bevorzugt ist das Verhältnis 1 : 1.

Die Teilhydrolyse kann unter saurer oder basischer Katalyse oder im neutralen Medium durchgeführt werden. Bevorzugt ist die saure Katalyse, wobei eine oder mehrere Säuren eingesetzt werden, beispielsweise Salzsäure, Schwefelsäure, Phosphorsäure, Salpetersäure und organische Säuren wie Essigsäure. In einer bevorzugten Ausführungsform wird die Teilhydrolyse zumindest teilweise mit Phosphorsäure durchgeführt. Damit hergestellte Beschichtungen zeichnen sich durch eine hohe Korrosionsbeständigkeit und ein Material ohne Verfärbung und Blasen aus.

Die epoxyfunktionalisierte Gruppe wird unter den Bedingungen der Teilhydrolyse der funktionalisierten Alkoxysilane nicht hydrolysiert.

Die Komponente A1 enthält ein oder mehrere, bevorzugt 1, 2 oder 3, oder 1 oder 2, insbesondere 1, Alkoxysilane der Formel (la).

### Komponente A2

Das Hybridmaterial enthält als Komponente A2 gegebenenfalls ein oder mehrere Alkoxysilane der Formel (Ib). In einer bevorzugen Ausführungsform enthält das Hybridmaterial 1, 2, 3, 4 oder 5, besonders bevorzugt 1 bis 4, Alkoxysilane der Formel (Ib). In einer weiteren bevorzugten Ausführungsform enthält das Hybridmaterial kein (0) Alkoxysilan der Formel (Ib).

Bevorzugt haben die Symbole und Indizes in der Formel (Ib) folgende Bedeutungen:
- R⁴: ist bevorzugt Methyl, Ethyl, Propyl oder Butyl, wobei die letzten beiden Gruppen unverzweigt oder verzweigt, vorzugsweise unverzweigt sind. besonders bevorzugt Methyl oder Ethyl.
- R⁵: ist C₁-C₈-Alkyl, C₆-C₁₀-Aryl, C₆-C₁₀-Aralkyl oder C₆-C₁₀-Alkaryl, wobei die genannten Reste gegebenenfalls mit einer oder mehreren, bevorzugt einer, Aminogruppen substituiert sind
- n: ist bevorzugt 3 oder 4.
- R⁴: ist besonders bevorzugt Methyl oder Ethyl.
- R⁵: ist besonders bevorzugt Methyl, Hexyl, Phenyl oder 3-Aminopropyl.
- n: ist besonders bevorzugt 3 oder 4.

Ganz besonders bevorzugte Alkoxysilane der Formel (Ib) sind Tetraethoxysilan, Methyltriethoxysilan, Hexyltriethoxysilan, Phenyltriethoxysilan und 3-Aminopropyltriethoxysilan.

Falls Alkoxysilane der Formel (Ib) eingesetzt werden liegen sie in Mischung mit den Alkoxysilanen der Formel (la) vor, weshalb hinsichtlich der Teilhydrolyse das das zur Komponente A1 Gesagte gilt. Die oben angegebenen Molverhältnisse beziehen sich in diesem Fall auf die Summe der Alkoxysilane der Formeln (la) und (Ib).

Durch den Zusatz von Alkoxysilanen der Komponente A2 kann der anorganische Anteil in der erfindungsgemäßen Beschichtungszusammensetzung vorteilhaft erhöht werden. Der Einsatz von Verbindungen wie Hexyltriethoxysilan und Phenyltriethoxysilan führt zu zur Erhöhung der Hydrophobie, einem verbesserten Korrosionsschutz sowie, im letzteren Fall zu einer erhöhten UV-Stabilität.

### Komponente B1

Die Komponente B1 des erfindungsgemäßen Hybridmaterials enthält ein oder mehrere Titanalkoxide der Formel (IIa),

Ti(OR⁶)₄ (IIa),

wobei R⁶ C₁-C₆-Alkyl oder C₆-C₁₀-Aryl ist.

R⁶ ist bevorzugt C₁-C₆-Alkyl, besonders bevorzugt n-Butyl.

Das molare Verhältnis von Si in Komponente A1 und A2 zu Ti in Komponente B1 beträgt von 1 - 20 : 1, bevorzugt 3 - 10 : 1, besonders bevorzugt 4 - 8 : 1, ganz besonders bevorzugt von 4,5 - 5,5 : 1.

Die Verwendung der Titanalkoxide in der Komponente B1 zeichnet sich beispielsweise dadurch aus, dass das Alkoxid dem System ohne weitere stabilisierende Liganden zugesetzt werden kann. Liganden, welche einen stabilisierenden Effekt auf die Metallalkoxide haben, sind bekannt, im Allgemeinen werden hier chelatbildende Liganden zum Einsatz gebracht. Es ist aber ein besonderer Vorteil der Erfindung, dass der Beschichtungszusammensetzung keine Stabilisatoren und insbesondere keine Chelatbildner zugesetzt werden müssen.

In einer bevorzugten Ausführungsform enthält die erfindungsgemäße Beschichtungszusammensetzung daher keine die Metallalkoxide der Formeln (IIa) und (IIb) stabilisierenden Komplexbildner, besonders bevorzugt keine Chelatbildner, insbesondere bevorzugt keine 1,3-Dicarbonylverbindungen.

Sollen dennoch Komplexbildner, welche einen stabilisierenden Effekt auf die Metallalkoxide haben, zugesetzt werden, eignen sich insbesondere 1,3-Dicarbonylverbindungen, z.B. β-Diketone, und β-Ketoester. Beispiele sind Ethylacetoacetat, Allylacetoacetat, Methacryloxyethylacetoacetat, 3-Acetyl-6-trimethoxysilylhexan-2-on, 2,2,6,6-Tetramethyl-3,5-heptandion, Methylbutyloylacetat, Ethylbenzoylacetat. Bevorzugt als Komplexbildner sind β-Diketone und β-Ketoester, besonders bevorzugt sind Acetylaceton (Pentan-2,4-dion) und Ethylacetoacetat (Acetessigester, Ethyl-3-oxobutyrat), insbesondere Ethylacetoacetat.

Als bevorzugt haben sich molare Verhältnisse von Metallalkoxid der Formel (IIa) und gegebenenfalls (IIb) zu Komplexbildner von 0,9:1,1 und als besonders bevorzugt 1:1 erwiesen. Sofern gewünscht, kann die Herstellung des Metallalkoxid-Komplexes bevorzugt bei niedrigen Temperaturen zwischen -10°C und 0°C erfolgen, besonders bevorzugt sind Temperaturen bei 0°C im Eisbad. Zu dem vorgelegten Metallalkoxid erfolgt bevorzugt unter Luftausschluss die Zugabe des Komplexbildners. Anschließend erfolgt vorzugsweise Rühren, vorzugsweise zwischen 8 und 48 Stunden, wobei 24 Stunden besonders bevorzugt sind.

### Komponente B2

Gegebenenfalls enthält das Hybridmaterial als Komponente B2 ein oder mehrere Metallalkoxide der Formel (IIb).

In einer bevorzugen Ausführungsform enthält das Hybridmaterial ein oder mehrere, vorzugsweise 1, 2 oder 3, besonders bevorzugt 1 oder 2, Metallalkoxide der Formel (IIb). In einer weiteren bevorzugten Ausführungsform enthält das Hybridmaterial kein (0) Metallalkoxid der Formel (IIb).

Geeignete Metalle M in der Formel (IIb) sind Metalle mit einer Elektronegativität < 1,5 (nach Pauling) aus den 3. und 4. Haupt- und Nebengruppen des Periodensystems der chemischen Elemente mit Ausnahme von Ti, vorzugsweise Al, Zr und B. Besonders bevorzugt ist Al.

In der Formel (IIb) ist n 0 oder 1, bevorzugt 1. X ist bevorzugt eine Gruppe OR⁷. OR⁷ ist bevorzugt C₁₋₆-Alkoxy oder C₆₋₁₀-Aryloxy. Bevorzugte Gruppen OR⁷ sind Methoxy, Ethoxy, Propoxy und Butoxy. Besonders bevorzugt sind Ethoxy und sec.-Butoxy.

Besonders bevorzugt als Verbindungen der Formel (IIb) sind Aluminiumalkoxide, insbesondere Aluminium-tri-sec.-butoxid (Aluminium-tri-sec.-butylat, Aluminium-tri-secbutanolat).

Sofern das Hybridmaterial ein Metallalkoxid der Formel (IIb) enthält, beträgt das molare Verhältnis von Ti in Komponente B1 zu Metallalkoxid B2 mindestens 1 : 1.

Bezüglich des Zusatzes von Komplexbildnern zu den Metallalkoxiden in der Komponente B2 gilt analog das unter der Komponente B1 Gesagte, das heißt, dass die erfindungsgemäße Beschichtungszusammensetzung bevorzugt keine stabilisierenden Komplexbildner, besonders bevorzugt keine Chelatbildner, insbesondere bevorzugt keine 1,3-Dicarbonylverbindungen enthält.

### Komponente C

Geeignet als Komponente C sind oligomere oder polymere Polyole, beispielsweise Polyvinylalkohole (erhältlich zum Beispiel unter den Mowiol^{®} Marken) oder andere Oligomere oder Polymere, die freie OH-Gruppen aufweisen, wie Polyester und Polyether mit OH-Gruppen, oder auch Polyacrylate mit Di- oder Polyolen als Alkoholkomponente.

Als Komponente C können vorzugsweise Polyesterpolyole, Polyetherpolyole, Polyetheresterpolyole, Polycarbonatpolyoie, Polyethercarbonatpolyole, Polybutadienderivate, Polysiloxane basierte Derivate sowie deren Mischungen eingesetzt werden, wie sie teilweise aus der Herstellung von Polyurethanen bekannt sind.

Geeignete Polyesterpolyole können Polykondensate aus Di- sowie gegebenenfalls Tri- und Tetraolen und Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Polyesterpolyole werden in an sich bekannter Weise durch Polykondensation aus aliphatischen und/oder aromatischen Polycarbonsäuren mit 4 bis 16 Kohlenstoffatomen, gegebenenfalls aus deren Anhydriden sowie gegebenenfalls aus deren niedermolekularen Estern, inklusive Ringestern hergestellt, wobei als Umsetzungskomponente überwiegend niedermolekulare Polyole mit 2 bis 12 Kohlenstoffatomen zum Einsatz kommen. Beispiele für geeignete Alkohole sind dabei Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester oder Mischungen davon, wobei Hexandiol(1,6) und Isomere, Butandiol(1,4), Neopentylglykol und Hydroxypivalinsäureneopentylglykolester bevorzugt sind. Daneben können auch Polyole wie Trimethylolpropan, Glycerin, Erythrit, Pentaerythrit, Trimetylolbenzol oder Trishydroxyethylisocyanurat oder Mischungen davon eingesetzt werden. Besonders bevorzugt werden Diole eingesetzt, ganz besonders bevorzugt Butandiol(1,4) und Hexandiol(1,6), ganz besonders bevorzugt Hexandiol(1,6).

Als Dicarbonsäuren können dabei beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure und/oder 2,2-Dirnethylbernsteinsäure eingesetzt werden. Als Säurequelle können auch die entsprechenden Anhydride verwendet werden.

Es können zusätzlich auch Monocarbonsäuren, wie Benzoesäure und Hexancarbonsäure mit verwendet werden.

Geeignete Verbindungen werden beispielsweise von Covestro unter den Desmophen^{®} Marken vertrieben. Bevorzugt ist insbesondere Desmophen^{®} D651 MDA/X, ein verzweigtes Polyesterpolyol von Covestro. Weiterhin bevorzugt ist Desmophen^{®} 1380 BT, ein trifunktionelles Polypropylenetherpolyol von Covestro.

Die Menge an Komponente C, bezogen auf die gesamte Beschichtungszusammensetzung, beträgt Im Allgemeinen 5 - 25 Gew.-%.

Bei der Herstellung der erfindungsgemäßen Beschichtungszusammensetzung werden die Oligomere oder Polymere im Allgemeinen in einem Verdünnungsmittel, beispielsweise einem oder mehreren Lösungsmitteln wie Alkoholen, Glykolen, Estern und/oder aromatischen Lösungsmitteln eingesetzt. Bevorzugt sind beispielsweise Glykolmonoetheracetate wie Propylenglykolmonomethyletheracetat (PGMEA, 1-Methoxy-2-propylacetat).

### Komponente D

Als Komponente D eignen sich erfindungsgemäß geblockte Polyisocyanate auf Basis von beispielsweise 1,4-Butylendiisocyanat, 1,6-Hexamethylendiisocyanat (HDI), Isophorondiisocyanat (IPDI), 2,2,4 und/oder 2,4,4- Trimethylhexamethylendiisocyanat, die isomeren Bis-(4,4'-isocyanatcyclohexyl)methane (H12-MDI) oder deren Mischungen beliebigen Isomerengehalts, 1,4-Cyclohexylendiisocyanat, 4-Isocyanatomethyl-1,8-octandiisocyanat (Nonantriisocyanat), 1,4-Phenylendiisocyanat, 2.4- und/oder 2,6-Toluylendiisocyanat (TDI), 1,5-Naphthylendiisocyanat , 2.2'- und/oder 2,4'- und/oder 4,4'- Diphenylmethandiisocyanat (MDI), 1,3- und/oder 1 ,4-Bis-(2-isocyanato-prop-2-yl)-benzol (TMXDI), 1,3-Bis(isocyanatomethyl)benzol (XDI), Alkyl-2,6-diisocyanatohexanoate (Lysindiisocyanate) mit Alkylgruppen mit 1 bis 8 Kohlenstoffatomen sowie Mischungen davon. Weiterhin sind Modifizierungen wie etwa Allophanat-, Uretdion-, Urethan-, Isocyanurat-, Biuret-, Iminooxadiazindion- oder Oxadiazintrionstruktur enthaltende Verbindungen basierend auf den genannten Diisocyanaten geeignete Bausteine der Komponente D sowie mehrkernige Verbindungen wie beispielsweise polymeres MDI (pMDI) sowie Kombinationen von allen.

Besonders bevorzugt werden geblockte Diisocyanate auf Basis von HDI und IPDI verwendet.

Die Isocyanatgruppen liegen partiell oder ganz blockiert vor, so dass sie nicht unmittelbar mit einer Isocyanat-reaktiven Gruppe reagieren können. Dies gewährleistet, dass die Reaktion erst bei einer bestimmten Temperatur (Blockierungstemperatur) stattfindet. Typische Blockierungsmittel finden sich im Stand der Technik und sind so ausgewählt, dass sie bei Temperaturen zwischen 60 und 220°C, je nach Substanz, von der Isocyanatgruppe wieder abspalten und erst dann mit der Isocyanat reaktiven Gruppe reagieren. Typische Blockierungsmittel sind beispielsweise Caprolactam, Methylethylketoxim, Pyrazole wie beispielsweise 3,5-Dimethyil-2-pyrazol oder 1-Pyrazol, Triazole wie beispielsweise 1,2,4-Triazol, Diisopropylamin, Diethylmalonat, Diethylamin, Phenol oder dessen Derivate oder Imidazol.

Entsprechende geblockte Isocyanate sind kommerziell erhältlich, beispielsweise unter den Desmodur^{®}-Marken von Covestro. Besonders bevorzugt sind geblockte Polyisocyanate auf Basis Isophorondiisocyanat und Hexamethylendiisocyanat, wie sie unter der Bezeichnung Desmodur^{®} PL 340 und 350 von Covestro erhältlich sind.

Als modifizierte Polyisocyanate werden bevorzugt Uretdione eingesetzt, beispielsweise das kommerziell erhältlichen Vestagon^{®} Produkte von Evonik.

Die Menge an Komponente D, bezogen auf die gesamte Beschichtungszusammensetzung, beträgt Im Allgemeinen 5 - 20 Gew.-%.

### Komponente E

Als Komponente E enthält das Hybridmaterial gegebenenfalls ein oder mehrere, bevorzugt ein, Monomere, Oligomere und/oder Polymere, die eine oder mehrere, bevorzugt mindestens zwei, freie Epoxygruppen aufweisen.

Bevorzugt als Komponente E sind Di- und Triglycidylether und -ester. Besonders bevorzugt sind 4,4'-Isopropylidenediphenoldiglycidylether (Bisphenol-A-diglycidylether BPADGE), Diglycidyl-1,2-cyclohexanedicarboxylate, 3,4-Epoxycyclohexylmethyl 3,4-epoxycyclohexanecarboxylat, Neopentylglycoldiglycidylether, Trimethylolpropantriglycidylether und Tris(4-hydroxyphenyl)methan triglycidyl ether, insbesondere 4,4'-lsopropylidenediphenoldiglycidylether.

In einer bevorzugten Ausführungsform enthält das Hybridmaterial ein oder mehrere, bevorzugt ein, Monomere, Oligomere und/oder Polymere, die mindestens zwei freie Epoxygruppen aufweisen. In diesem Fall beträgt die Menge an Komponente E, bezogen auf die Komponente A1 im Allgemeinen 5 - 25, bevorzugt 10 - 20 Mol%.

In einer weiteren bevorzugten Ausführungsform enthält das Hybridmaterial, bevorzugt die gesamte Beschichtungszusammensetzung, kein (0) Monomer, Oligomer oder Polymer, das eine oder mehrere freie Epoxygruppen aufweist.

[In bevorzugten Ausführungsformen wird das erfindungsgemäße Hybridmaterial erhalten aus:
- A1.: einem oder mehreren (vorzugsweise 1) teilhydrolysierten Alkoxysilanen der Formel (la), bevorzugt 3-Glycidyloxypropyltriethoxysilan;
- A2.: einem oder mehreren (bevorzugt 2 bis 5) teilhydrolysierten Alkoxysilanen der Formel (Ib),
- B1.: einem Metallalkoxid der Formel (IIa), bevorzugt Tetra-n-butyltitanat;
- C.: einem oder mehreren (vorzugsweise 1) oligomeren oder polymeren Polyolen, bevorzugt verzweigten Hydroxylgruppen enthaltenden Polyestern und/oder -Polyethern, besonders bevorzugt verzweigten Hydroxylgruppen enthaltenden Polyestern;
- D.: einem oder mehreren (vorzugsweise 1) geblockten, gegebenenfalls modifizierten Polyisocyanaten, bevorzugt geblockten aliphatischen Polyisocyanaten auf Basis von Isophorondiisocyanat und
- E.: gegebenenfalls einem oder mehreren (vorzugsweise 1) Monomeren, Oligomeren und/oder Polymeren, die eine oder mehrere, bevorzugt mindestens zwei, freie Epoxygruppen aufweisen, bevorzugt Di- und/oder Triglycidylether und/oder -ester, besonders bevorzugt 4,4'-Isopropylidenediphenoldiglycidylether.

Bevorzugt sind dabei Ausführungsformen, bei denen die Komponente E aus einem oder mehreren (vorzugsweise 1) Monomeren, Oligomeren und/oder Polymeren, die eine oder mehrere, bevorzugt mindestens zwei, freie Epoxygruppen aufweisen, bevorzugt Di- und/oder Triglycidylether und/oder -ester, besonders bevorzugt 4,4'-Isopropylidendiphenoldiglycidylether, besteht.

Weiterhin bevorzugt sind solche der genannten Ausführungsformen, die keine Komponente E enthalten.

In den genannten Ausführungsformen enthält die Komponente A2 bevorzugt mindestens ein Trialkoxysilan (n = 3), bevorzugt mindestens ein Trialkoxysilan, bei dem R⁵ C₁-C₈-Alkyl, bevorzugt Methyl oder Hexyl, Phenyl oder 3-Aminopropyl ist und besonders bevorzugt mindestens drei verschiedene Trialkoxysilane, bei denen R⁵ jeweils C₁-C₈-Alkyl, bevorzugt Methyl oder Hexyl, Phenyl oder 3-Aminopropyl ist.

In einer weiteren bevorzugten Ausführungsform enthält die Komponente A2 mindestens ein Tetraalkoxysilan (n = 4), bevorzugt Tetraethoxysilan, sowie mindestens ein Trialkoxysilan (n = 3), bevorzugt mindestens ein Trialkoxysilan, bei dem R⁵ C₁-C₈-Alkyl, bevorzugt Methyl oder Hexyl, Phenyl oder 3-Aminopropyl ist und besonders bevorzugt mindestens drei verschiedene Trialkoxysilane, bei denen R⁵ jeweils C₁-C₈-Alkyl, bevorzugt Methyl oder Hexyl, Phenyl oder 3-Aminopropyl ist.

### II. Farbmittel

Neben dem Hybridmaterial enthält die erfindungsgemäße Beschichtungszusammensetzung gegebenenfalls ein oder mehrere Farbmittel.

In einer bevorzugten Ausführungsform enthält die erfindungsgemäße Beschichtungszusammensetzung ein oder mehrere, vorzugsweise 1 bis 3 Farbmittel.

In einer weiteren bevorzugten Ausführungsform enthält die erfindungsgemäße Beschichtungszusammensetzung kein (0) Farbmittel.

Als Farbmittel werden zur Erzielung verschiedener Farbeffekte der erfindungsgemäßen Beschichtungszusammensetzung Pigmente (organische und anorganische, farbige anorganische Ionen oder farbige Komplexe, Effektpigmente) oder lösliche Farbstoffe zugegeben. Stellvertretend für die Vielzahl der sich am Markt befindenden Pigmente seien beispielsweise aus der Palette der BASF SE, Effektpigmente Black Olive^{™}>, Effektpigmente auf Glimmerbasis, Dynacolor^{®} Perlglanzpigmente, Firemist^{®} Pigmente auf Borosilikatbasis, Glacier^{™} Frost White, Graphitan^{®} Graphit-Schwarzpigment, Lumina^{®} Effektpigmente auf Glimmerbasis, Lumina^{®} Royal Effektpigmente auf Glimmerbasis, MagnaPearl^{®} Perlglanzpigmente, Mearlin^{®} Perlglanzpigmente, Mearlite^{®} Glanzpigmente, Metasheen^{®} Vakuum-metallisierte Aluminumpigmente, Aluminiumpigment-Paste, z. B. Hydrolan, Paliocrom^{®} Effektpigmente, Paliocrom^{®} Brilliant Effektpigmente, Santa Fe^{™} Farbeffektpigmente oder andere, wie zum Beispiel Chromaflow Weiß-, Farb- und Goldpigmente, Timrex KS4, Aerosil^{®} 200 und Iriodin^{®} 299 bzw. aus Timrex^{®} KS4, Aerosil^{®} 200, Mica Effektpigment beispielsweise Royal Gold 323, Rußpigmente, wie Carbon Black Pigment 200 PWD, Carbon Black Pigmentpaste und Glanzkupfer, beispielsweise Iriodin^{®} 532 genannt. Bei Metallkomplexfarbstoffen handelt es sich zum Beispiel um anionische Chrom und Kobaltkomplexe von Azofarbstoffen. Das Kation ist zum Beispiel entweder ein Natriumion oder ein substituiertes Ammoniumion. Substituierte lösliche Phthalocyanine gehören ebenfalls in diese Kategorie.

Beispiele für organische Azo-Pigmente sind: Monoazogelb und -orange, Naphthol, Naphthol AS, Azofarblacke, Benzimidazolon, Metallorganische Komplexe.

Beispiele für organische polyzyklische Pigmente sind: Phthalocyanin, Chinacridon, Perylen und Perinon, Thioindigo, Anthrachinon, Dioxazin, Isoindolinon und Isoindolin, Diketo-pyrrolopyrrol (DPP), Triarylcarbonium, Chinophthalon Beispiele für anorganische Pigmente sind:
Eisenoxid, Chromoxidgrün, Ultramarinblau, Eisenblau, Phthalochromgrün, verschiedene Mischmetalloxide Bi-Vanadat, Manganoxid (MnO). Als Farbstoffe kommen beispielsweise Anthrachinonfarbstoffe, Azofarbstoffe, Dioxazinfarbstoffe, Indigofarbstoffe, Nitro- und Nitrosofarbstoffe, Phthalocyaninfarbstoffe, Schwefelfarbstoffe, Triphenylmethanfarbstoff in Frage. Spezielle Beispiele sind Kongorot, Methylorange, Rhodamin B oder Methylrot.

Die für 50 ml Beschichtungslösung benötigten Farbmittel hängen von der gewünschten Intensität der Farbe ab und reichen von 0,1 bis 20 g, bevorzugt zwischen 1 und 15 g besonders bevorzugt zwischen zwei und 12 g.

Die Menge an Farbmittel II, bezogen auf die gesamte Beschichtungszusammensetzung, beträgt Im Allgemeinen 0,1 - 40 Gew.-%

### III. Zusatzstoffe

Die erfindungsgemäße Beschichtungszusammensetzung enthält gegebenenfalls einen oder mehrere Zusatzstoffe.

In einer bevorzugten Ausführungsform enthält die erfindungsgemäße Beschichtungszusammensetzung einen oder mehrere, vorzugsweise 1 bis 10 Zusatzstoffe. In diesem Fall beträgt die Menge an Zusatzstoffen, bezogen auf die gesamte Beschichtungszusammensetzung im Allgemeinen 0,1 bis 10 Gew.-%, vorzugsweise 1 bis 5 Gew.-%.

In einer weiteren bevorzugten Ausführungsform enthält die erfindungsgemäße Beschichtungszusammensetzung keinen (0) Zusatzstoff.

Bevorzugt als Zusatzstoffe sind Dispergiermittel für das oder die Farbmittel sowie handelsübliche Additive zur Anpassung der Rheologie, insbesondere Benetzungshilfsmittel und Verlaufshilfsmittel, wie sie beispielsweise von der Firma Byk in verschiedensten Ausführungen vertrieben werden. Ein Beispiel für ein Dispergiermittel ist Tego Dispers 670, Beispiele für Additive zur Anpassung der Rheologie sind Tego Glide 100. Des Weiteren können zur Verbesserung der UV-Stabilität UV-Stabilisatoren wie beispielsweise Eversorb 40, Eversorb 81 und/oder Eversorb 95 zugegeben werden.

Weitere mögliche Zusatzstoffe sind Nanopartikel (z.B. SiO₂, TiO₂, Al2O3, AIOOH, ZnO, B₂O₃, ZrO₂, Talke, Mica), welche beispielsweise in Mengen von 0,1 - 40 Gew.%, bezogen auf die gesamte Beschichtungszusammensetzung, zugesetzt werden können, um mechanische und optische Eigenschaften einzustellen.

Neben dem synthesebedingten, aus der Teilhydrolyse herrührenden Anteil an Alkohol(en) enthält die erfindungsgemäße Beschichtungszusammensetzung gegebenenfalls ein oder mehrere weitere Verdünnungsmittel. Die Menge an Verdünnungsmitteln (Alkohol(e) und gegebenenfalls weitere Verdünnungsmittel), bezogen auf die gesamte Beschichtungszusammensetzung, beträgt im Allgemeinen 20 - 80 Gew.%.

Einzelne Komponenten der erfindungsgemäßen Beschichtungszusammensetzung werden üblicherweise bereits in einem Verdünnungsmittel eingesetzt. So werden bei der Herstellung der erfindungsgemäßen Beschichtungszusammensetzung die Oligomere oder Polymere im Allgemeinen in einem Verdünnungsmittel, beispielsweise einem oder mehreren Lösungsmitteln wie Alkoholen, Glykolen, Estern und/oder aromatischen Lösungsmitteln eingesetzt. Bevorzugt sind beispielsweise Glykolmonoetheracetate wie Propylenglykolmonomethyletheracetat (PGMEA, 1-Methoxy-2-propylacetat).

Zur Herstellung der Beschichtungslösungen werden zudem der Basislösung aus den Komponenten I bis III zum Einstellen der geeigneten Viskosität im Allgemeinen handelsübliche Lösemittel zugesetzt, wie sie zum Beispiel in technischen Handbüchern für Lacke beschrieben sind. Beispiele hierfür sind aliphatische Alkohole, aliphatische Ester, alkoxygruppenhaltige Alkohole wie zum Beispiel 1-Methoxy-2-Propanol, Ketone, auch substituierte, wie zum Beispiel Butylacetat oder Xylol oder auch Mischungen aus diesen.

Die zugesetzten Mengen pro 50 ml Beschichtungszusammensetzung liegen zwischen 5 und 200 ml, bevorzugt zwischen 10 und 100 ml und besonders bevorzugt zwischen 10 und 20 ml.

Die Herstellung der erfindungsgemäßen Beschichtungszusammensetzung erfolgt vorteilhaft in mehreren Stufen.

Zunächst wird das Teilhydrolysat (Ausgangskomponenten A1 und gegebenenfalls A2) hergestellt. Die Teilhydrolyse kann unter saurer oder basischer Katalyse oder im neutralen Medium durchgeführt werden. Bevorzugt ist die saure Katalyse, wobei eine oder mehrere Säuren eingesetzt werden, beispielsweise Salzsäure, Schwefelsäure, Phosphorsäure, Salpetersäure oder organische Säuren wie Essigsäure. In einer bevorzugten Ausführungsform wird die Teilhydrolyse zumindest teilweise mit Phosphorsäure durchgeführt

In einer bevorzugten Ausführungsform wird das Teilhydrolysat hergestellt, bei dem die Alkoxysilane (la und gegebenenfalls Ib) mit Wasser im molaren Verhältnis 7,5:1 - 1:1,5, bevorzugt im Verhältnis 5:1 - 1:1 und besonders bevorzugt im Verhältnis 1:1 versetzt und vorzugsweise bei Raumtemperatur intensiv gerührt werden. Als vorteilhaft haben sich Zeiträume zwischen 8 und 16 Stunden, besonders bevorzugt 12 Stunden, herausgestellt.

Die Herstellung einer Basislösung durch Reaktion der Ausgangskomponenten A1 und gegebenenfalls A2 mit den Komponenten B1 und gegebenenfalls B2 erfolgt im Allgemeinen durch Mischen bei Temperaturen zwischen vorzugsweise -10°C und 0°C, wobei das Eisbad mit 0°C besonders bevorzugt ist.

Die Mischung erfolgt bevorzugt durch Zugabe der Metallalkoxidlösung der Komponenten B1 und gegebenenfalls B2 unter Rühren zum Vorhydrolysat desr Alkoxysilans (A1 und gegebenenfalls A2) im molaren Verhältnis 0,1:1 - 1:1, bevorzugt 0,2:1 - 0,7:1, insbesondere 0,3:1 - 0,6:1.

Die Rührdauer und damit die Dauer des homogenen Vermischens beträgt im Allgemeinen zwischen 1 und 3 Stunden vorzugsweise zwischen 1 und 2 Sunden, besonders bevorzugt 90 Minuten.

Um die Reaktion zu vervollständigen, werden pro 50 ml Reaktionslösung zwischen 3 bis 100 ml, bevorzugt 3 bis 50 und besonders bevorzugt 4 bis 4,5 ml destilliertes Wasser zugetropft und für weitere ein bis fünf, bevorzugt 2 Stunden gerührt (Basislösung).

Zu der entstandenen Mischung aus den Komponenten A1 und gegebenenfalls A2 mit den Komponenten B1 und gegebenenfalls B2 wird als Komponente C ein oligomeres oder polymeres Polyol, zum Beispiel ein Polyvinylalkohol oder Polyesteralkohol, zugesetzt. Das Molverhältnis von Alkoxysilanen (la und gegebenenfalls Ib) zu Polyol beträgt im Allgemeinen 2:1 - 1:2.

Die Beschichtungszusammensetzung enthält geblockte, gegebenenfalls modifizierte Isocyanate als Komponente D. Komponente D wird typischerweise unter Rühren zu der Lösung der Komponenten A, B und C gegeben.

Dabei beträgt das Verhältnis von freien Hydroxygruppen im Polyol zu NCO-Gruppen im Allgemeinen 5:1 bis 1:1, bevorzugt 2,5:1 bis 1:1, insbesondere 1,2:1 bis 1:1.

Optional können zu der beschriebenen Mischung als Komponente E ein oder mehrere, Monomere, Oligomere und/oder Polymere, die mindestens zwei freie Epoxygruppen aufweisen, zugegeben werden.

Zur Vervollständigung der Reaktion wird nachgerührt, typischerweise zwischen 1 und 3 h.

Zur Herstellung von Beschichtungslösungen werden der Basislösung zum Einstellen der geeigneten Viskosität im Allgemeinen handelsübliche Lösemittel als Verdünnungsmittel zugesetzt, wie sie beispielsweise in technischen Handbüchern für Lacke beschrieben sind. Beispiele hierfür sind aliphatische Alkohole, aliphatische Ester, alkoxygruppenhaltige Alkohole wie zum Beispiel 1-Methoxy-2-Propanol, Ketone, auch substituierte, wie zum Beispiel Butylacetat oder Xylol oder auch Mischungen aus diesen.

Die zugesetzten Mengen pro 50 ml Beschichtungszusammensetzung liegen zwischen 5 und 200 ml, bevorzugt zwischen 10 und 100 ml und besonders bevorzugt zwischen 10 und 20 ml.

Darüber hinaus werden der Basislösung gegebenenfalls die Zusatzstoffe III, beispielsweise handelsübliche Additive zur Anpassung der Rheologie, insbesondere Benetzungshilfsmittel und Verlaufshilfsmittel, zugesetzt.

Weiterhin werden zur Erzielung verschiedener Farbeffekte der Basislösung gegebenenfalls Farbmittel II beispielsweise Pigmente (organische und anorganische, farbige anorganische Ionen oder farbige Komplexe, Effektpigmente) oder lösliche Farbstoffe zugegeben.

Das erfindungsgemäße Verfahren zur Herstellung eines beschichteten Substrats enthält die Schritte
a) nasschemisches Aufbringen der erfindungsgemäßen Beschichtungszusammensetzung auf das Substrat und
b) thermisches Aushärten der Beschichtungszusammensetzung.

Das nasschemische Aufbringen (Schritt a)) der Beschichtungszusammensetzung kann über die üblichen, dem Fachmann bekannten nasschemischen Beschichtungstechniken aufgetragen werden, z.B. Sprühen, elektrostatisches Sprühen, Tauchen, Gießen, Schleudern, Walzenauftrag, Aufstreichen, Rakeln oder Curtain-Coating. Es können z.B. auch Druckverfahren, wie beispielsweise Siebdruck, verwendet werden. Bevorzugt ist eine Auftragung durch Sprühen, beispielsweise auf glanzeloxierte Zierleisten.

Die auf das Substrat aufgetragene Beschichtungszusammensetzung wird normalerweise bei Temperaturen von 80 bis 240°C, bevorzugt 120 bis 230°C besonders bevorzugt bei 150 bis 220°C ganz besonders bevorzugt bei 180 bis 210°C, insbesondere 170 bis 190°C gehärtet (Schritt b)). Beinhaltet die Härtung einen ersten Trocknungsschritt so erfolgt dieser im Allgemeinen bei einer Temperatur von 80 bis 120°C, worauf die weitere Härtung im Allgemeinen bei Temperaturen von 160 bis 240°C durchgeführt wird

Die Härtung kann durch eine beliebige Art der Wärmezuführung erfolgen (Umgebungstemperatur, Infrarotstrahlung, Mikrowellenstrahlung). Bei konventioneller Wärmezufuhr, beispielsweise in einem Ofen, beträgt die Aushärtungszeit zwischen 2 und 120 Minuten, besonders bevorzugt zwischen 5 und 15 Minuten, insbesondere 12 Minuten (bei Temperaturen von 180 bis 210°C).

Die Mikrowellenhärtung erfolgt mit marktgängigen Anlagen und die Härtungszeit beträgt im Allgemeinen zwischen 5 und 20 Minuten, besonders bevorzugt zwischen 5 und 15 Minuten.

Im Falle einer Eloxaloberfläche werden im Allgemeinen Temperaturen bis ca. 160°C und Härtungszeiten von ca. 1 h angewendet. Eine thermische Verdichtung kann gegebenenfalls auch durch IR- oder NIR-Strahlung erfolgen.

Die nach dem erfindungsgemäßen Verfahren erhaltenen Schichtdicken liegen im Allgemeinen im Bereich von 3 bis 15 µm.

### Substrat

Die erfindungsgemäße Beschichtungszusammensetzung und das erfindungsgemäße Verfahren dienen zur Herstellung von dekorativen und schützenden Beschichtungen auf Oberflächen und Substraten, wobei der Begriff Substrat erfindungsgemäß Oberflächen umfasst. Bevorzugt sind Metall-, Glas- und Kunststoff-Substrate. Besonders bevorzugt als Substratmaterialien aus Aluminium und seinen Legierungen, eloxiertem Aluminium, Kohlenstoffstahl, Stahl und seine Legierungen, Edelstahl, Kupferlegierungen, Messinglegierungen und Bronze. Das Substrat kann in einer weiteren Ausführungsform auch aus Glas oder Kunststoff sein.

Bevorzugt sind unter anderem Leichtmetallsubstrate. Leichtmetalle im Sinne der Erfindung sind Metalle und Legierungen mit einer Dichte unter 5 g/cm³. Bevorzugt sind Al, Mg und Ti sowie deren Legierungen, besonders bevorzugt ist Al und seine Legierungen, insbesondere mit den Elementen Mn, Mg, Cu, Si, Ni, Zn und Be. Die Bezeichnung von Aluminiumlegierungen folgt der EN 573-3/4.

In einer weiteren bevorzugten Ausführungsform handelt es sich bei dem Substrat um ein nicht-eloxiertes Aluminiumsubstrat.

In einer weiteren Ausführungsform handelt es sich bei dem Substrat um ein eloxiertes Aluminiumsubstrat.

Das mit der erfindungsgemäßen Beschichtungszusammensetzung beschichtete Substrat kann ein Halbzeug, wie Platten, Bleche, Rohre, Stangen oder Drähte, ein Bauteil bzw. Komponente oder ein Fertigprodukt sein. Es kann z.B. für Anlagen, Werkzeuge, Hausgeräte wie Bügeleisen, Elektrobauteile, Schalter, Maschinen, Fahr- und Flugzeugteile, insbesondere Automobilbauteile, Gepäckstücke wie Koffer, Gehäuse, Produktionsanlagen, Fassaden, Wärmetauscher oder Teile davon verwendet werden.

Die Beschichtungen sind insbesondere geeignet für metallische, beispielsweise Aluminiumsubstrate wie Metallgehäuse von elektronischen Geräten, Bauteile für optische Geräte, Teile von Fahrzeugen im Innen- und Außenbereich, Bauteile im Maschinen- und Anlagenbau, Motoren, Bauteile von medizintechnischen Geräten, Bauteile von Hausgeräten, andere Elektrogeräte und Turbinen, Haushaltsgeräte, Fassadenbauteile, Komponenten von Aufzügen, Teile von Fördereinrichtungen, Teile von Möbeln, Griffe, Sitzteile, insbesondere für Fahr- und Flugzeuge, Gartengeräte, Landmaschinen, Beschläge, Motorenbauteile und Produktionsanlagen allgemein. Daneben können sie Anwendungen im dekorativen Bereich, beispielsweise für Modeschmuck finden.

Die Erfindung wird durch die nachstehenden Beispiele weiter erläutert, die in keiner Weise beschränken sollen.

### Beispiele:

### Beispiel 1

### Basislack:

244 mmol 3-Glycidyloxypropyltriethoxysilan wurden mit 6,60 g 1M Phosphorsäure gerührt und auf 10°C gekühlt. Danach wurden 50mmol Orthobutyltitanat (Titantetra-n-butanolat) zugegeben, nachgerührt und weiter auf 10°C gekühlt. Dazu wurden 220 mmol Wasser getropft und weiter gerührt.

Anschließend gab man 500 mmol Propylenglykolmonomethyletheracetat (PGMEA), 191 mmol verzweigten Hydroxylgruppen enthaltenden Polyester (Desmophen D651 MPA/X) und 51 mmol geblockte aliphatische Polyisocyanate auf Basis von Isophorondiisocyanat (Desmodur PL340 BA/SN) zu und rührte nach.

### Herstellung eines silberfarbenen Lackes:

244 mmol 3-Glycidyloxypropyltriethoxysilan wurden mit 6,60 g 1M Phosphorsäure gerührt und auf 10°C gekühlt. Danach wurden 50mmol Orthobutyltitanat zugegeben, nachgerührt und weiter auf 10°C gekühlt. Dazu wurden 220 mmol Wasser getropft und weiter gerührt. Anschließend gab man 500 mmol PGMEA, 191 mmol verzweigten Hydroxylgruppen enthaltenden Polyester (Desmophen D651 MPA/X) und 51 mmol geblockte aliphatische Polyisocyanate auf Basis von Isophorondiisocyanat (Desmodur PL340 BA/SN) zu und rührte nach. Anschließend gab man 100,0g PGMEA, 5,0g Oberflächen- und Rheologische Additive (Tego Dispers 6700 und Glide 100), 8,3g Aluminiumpigmentpaste (Hydrolan STAPA S2100), 20,8g Perlmuttpigment (Magnapearl 3100), und 8,0g gelbe und weiße Pigmentpaste zu und rührte nach.

Die Beschichtungszusammensetzung aus Beispiel 1 wurde über Sprühbeschichtung mit einem Roboter auf nicht eloxierte vorgereinigte Aluminiumbauteile aufgetragen. Die Schichtdicke wurde auf 12 µm eingestellt. Die Härtung der Beschichtung erfolgte ohne Vortrocknung bei einer Temperatur von 160°C für 60 min in einem Umluftofen. Die erhaltenen silberfarbenen Schichten erfüllen die gewünschten Anforderungen.

### Beispiel 2

### Herstellung Basislack:

132 mmol 3-Glycidyloxypropyltriethoxysilan wurden mit 101 mmol Methyltrimethoxysilan, 31 mmol Tetraethoxysilan, 39 mmol Phenyltriethoxysilan und 13 mmol Hexyltrimethoxysilan vorgelegt, dazu 5,79 g 1M Phosphorsäure zugegeben, gerührt und auf 10°C gekühlt.

Danach wurden 63 mmol Orthobutyltitanat zugegeben, nachgerührt und weiter auf 10°C gekühlt. 463 mmol Wasser wurden dazu zu getropft und weiter gerührt. Anschließend gab man 624 mmol PGMEA, 104mmol verzweigte Hydroxylgruppen enthaltenden Polyester (Desmophen D651 MPA/X), 28 mmol geblockte aliphatische Polyisocyanate auf Basis von Isophorondiisocyanat (Desmodur PL340 BA/SN), 18 mmol 4,4'-Isopropylidendiphenoldiglycidylether, 10 mmol 3-Glycidyloxypropyltriethoxysilan und 5 mmol 3-Aminopropyltriethoxysilan zu und rührte die Mischung nach.

### Herstellung eines bronzefarbenen Lackes:

132 mmol 3-Glycidyloxypropyltriethoxysilan wurden mit 101 mmol Methyltrimethoxysilan, 31 mmol Tetraethoxysilan, 39 mmol Phenyltriethoxysilan und 13 mmol Hexyltrimethoxysilan vorgelegt, dazu 5,79 g 1M Phosphorsäure zugegeben, nachgerührt und auf 10°C gekühlt.

Danach wurden 63 mmol Orthobutyltitanat zugegeben, nachgerührt und weiter auf 10°C gekühlt. 463 mmol Wasser wurden dazu zu getropft und weiter gerührt. Anschließend gab man 624 mmol PGMEA, 104mmol verzweigten Hydroxylgruppen enthaltenden Polyester (Desmophen D651 MPA/X), 28 mmol geblockte aliphatische Polyisocyanate auf Basis von Isophorondiisocyanat (Desmodur PL340 BA/SN), 18 mmol 4,4'-Isopropylidendiphenoldiglycidylether, 10 mmol 3-Glycidyloxypropyltriethoxysilan und 5 mmol 3-Aminopropyltriethoxysilan zu und rührte die Mischung nach.

Anschließend gab man 38,0g PGMEA, 5,5g Oberflächen- und rheologische Additive (Tego Dispers 6700 und Glide 100), 22,63g Micas Effekt Pigment (Royal Gold 323), 1,13g Carbon Black Pigment (200 PWD) zu und rührte die Mischung nach.

### Beispiel 3

103 mmol 3-Glycidyloxypropyltriethoxysilan wurden mit 79 mmol Methyltrimethoxysilan, 24 mmol Tetraethoxysilan, 31 mmol Phenyltriethoxysilan und 11 mmol Hexyltrimethoxysilan vorgelegt, dazu 4,53 g 1M Phosphorsäure zugegeben, nachgerührt und auf 10°C gekühlt.

Danach wurden 49 mmol Orthobutyltitanat zugegeben, nachgerührt und weiter auf 10°C gekühlt. Dazu wurden 363 mmol Wasser zugetropft und nachgerührt. Anschließend gab man 470 mmol Aceton, 282 mmol Isopropylidenglyzerin, 54,2 g verzweigten Hydroxylgruppen enthaltenden Polyester (Plusodur V730S), 66 mmol geblockte aliphatischen Polyisocyanate auf Basis von Isophorondiisocyanat (Desmodur PL340 BA/SN), 14 mmol 4,4'-Isopropylidenediphenoldiglycidylether, 8 mmol 3-Glycidyloxypropyltriethoxysilan und 4 mmol 3-Aminopropyltriethoxysilan und rührte die Mischung nach.

### Herstellung eines hochglänzenden schwarzen Lackes:

103 mmol 3-Glycidyloxypropyltriethoxysilan wurden mit 79 mmol Methyltrimethoxysilan, 24 mmol Tetraethoxysilan, 31 mmol Phenyltriethoxysilan und 11 mmol Hexyltrimethoxysilan vorgelegt, dazu 4,53 g 1M Phosphorsäure zugegeben gerührt und auf 10°C gekühlt.

Danach wurden 49 mmol Orthobutyltitanat zugegeben, nachgerührt und weiter auf 10°C gekühlt. Dazu wurden 363 mmol Wasser zugetropft und weiter gerührt.

Anschließend gab man 470 mmol Aceton, 282 mmol Isopropylidenglyzerin, 54,2 g verzweigten Hydroxylgruppen enthaltenden Polyester (Plusodur V730S), 66 mmol geblockte aliphatische Polyisocyanate auf Basis von Isophorondiisocyanat (Desmodur PL340 BA/SN), 14 mmol 4,4'-Isopropylidenediphenoldiglycidylether, 8 mmol 3-Glycidyloxypropyltriethoxysilan und 4 mmol 3-Aminopropyltriethoxysilan zu und rührte die Mischung nach.

Anschließend gab man 50,0g Aceton, 69,0g Isopropylidenglycerin, 4,0g Oberflächen- und Rheologische-Additive (Tego Dispers 6700 und Glide 100) sowie 30,0g Carbon Black Pigmentpaste zu und rührte die Mischung nach.

### Beispiel 4

173 mmol 3-Glycidyloxypropyltriethoxysilan wurden mit 133 mmol Methyltrimethoxysilan, 40 mmol Tetraethoxysilan, 51 mmol Phenyltriethoxysilan und 18 mmol Hexyltrimethoxysilan vorgelegt. Dazu wurden 7,59 g 1M Phosphorsäure gegeben, nachgerührt und auf 10°C gekühlt. Danach wurden 82 mmol Orthobutyltitanat zugegeben, nachgerührt und wieder auf 10°C gekühlt. Dazu wurden 606 mmol Wasser zugetropft und nachgerührt.

Anschließend gab man 434 mmol PGMEA, 19,33 g trifunktionales Polypropylenetherpolyol (Desmophen D1380BT), 28 mmol geblockte aliphatische Polyisocyanate auf Basis von Isophorondiisocyanat (Desmodur PL340 BA/SN), 24 mmol 4,4'-lsopropylidendiphenoldiglycidylether, 14 mmol 3-Glycidyloxypropyltriethoxysilan und 7 mmol 3-Aminopropyltriethoxysilane zu und rührte nach.

## Patentansprüche

1. Beschichtungszusammensetzung, enthaltend
I. ein anorganisch-organisches Hybridmaterial, erhalten aus
A1. einem oder mehreren teilhydrolysierten Alkoxysilanen der Formel (la),
(R¹O)ₙSiR²₃₋ₙR³ (la)
wobei die Symbole und Indizes folgende Bedeutungen haben:
R¹ ist C₁-C₆-Alkyl oder C₁-C₁₀-Aryl,
R² ist C₁-C₄-Alkyl, C₂-C₄-Alkenyl oder C₂-C₄-Alkinyl, C₆-C₁₀-Aryl, C₆-C₁₀-Aralkyl oder C₆-C₁₀-Alkaryl,
R³ ist eine epoxyfunktionale Gruppe und
n ist 1, 2 oder 3;
A2. gegebenenfalls einem oder mehreren teilhydrolysierten Alkoxysilanen der Formel (Ib),
(R⁴O)ₙSiR⁵₄₋ₙ (Ib)
wobei die Symbole und Indizes folgende Bedeutungen haben:
R⁴ ist C₁-C₆-Alkyl oder C₆-C₁₀-Aryl,
R⁵ ist C₁-C₁₀-Alkyl, C₂-C₄-Alkenyl oder C₂-C₄-Alkinyl, C₆-C₁₀-Aryl, C₆-C₁₀-Aralkyl oder C₆-C₁₀-Alkaryl, wobei die genannten Reste gegebenenfalls mit einer oder mehreren, bevorzugt einer, Aminogruppen substituiert sind und
n ist 1, 2, 3 oder 4;
B1. einem oder mehreren Metallalkoxiden der Formel (IIa),
Ti(OR⁶)₄ (IIa)
wobei die Symbole folgende Bedeutungen haben:
R⁶ ist C₁-C₆-Alkyl oder C₆-C₁₀-Aryl;
B2. gegebenenfalls einem oder mehreren Metallalkoxiden der Formel (IIb),
M^{+(4-m)}(OR⁷)₄₋ₘ (IIb)
wobei die Symbole und Indizes folgende Bedeutungen haben:
M ist ein Metall der 3. oder 4. Haupt- oder Nebengruppe mit EN < 1,5 mit Ausnahme von Ti,
R⁷ ist C₁-C₆-Alkyl, oder C₆-C₁₀-Aryl und
m ist 0 oder 1, bevorzugt 1,
wobei das molare Verhältnis von Si in Komponente A1 und A2 zu Ti in Komponente B1 1 - 20 : 1 beträgt;
C. einem oder mehreren oligomeren oder polymeren Polyolen;
D. einem oder mehreren geblockten, gegebenenfalls modifizierten Polyisocyanaten und
E. gegebenenfalls einem oder mehreren Monomeren, Oligomeren und/oder Polymeren, die ein oder mehrere, vorzugsweise mindestens zwei, freie Epoxygruppen aufweisen;
II. gegebenenfalls ein oder mehrere Farbmittel und
III. gegebenenfalls ein oder mehrere Zusatzstoffe.

2. Beschichtungszusammensetzung gemäß Anspruch 1, enthaltend eine Verbindung (la), bei der die Symbole und Indizes in der Formel (la) folgende Bedeutungen haben:
R¹ ist C₁-C₄-Alkyl,
R³ ist 3-Glycidyloxypropyl und
n ist 3,
bevorzugt 3-Glycidyloxypropyltrimethoxysilan und/oder 3-Glycidyloxypropyltriethoxysilan.

3. Beschichtungszusammensetzung gemäß Anspruch 1 oder 2, wobei ein oder mehrere Verbindungen der Formel (Ib) enthalten sind, bevorzugt gewählt aus der Gruppe bestehend aus Tetraethoxysilan, Methyltriethoxysilan, Hexyltriethoxysilan, Phenyltriethoxysilan, Aminopropyltriethoxysilan und Mischungen aus zwei oder mehr der genannten Verbindungen.

4. Beschichtungszusammensetzung gemäß einem der Ansprüche 1 bis 3, wobei die Teilhydrolyse der Verbindung der Formel (I) im sauren Medium, bevorzugt unter Zugabe von Phosphorsäure, erfolgte.

5. Beschichtungszusammensetzung gemäß einem der Ansprüche 1 bis 4, wobei die Verbindung (IIa) Titantetra-(n)-butanolat ist

6. Beschichtungszusammensetzung gemäß einem der Ansprüche 1 bis 5, wobei die Symbole und Indizes in der Formel (IIb) folgende Bedeutungen haben:
M ist Al, Zr, oder B;
R⁷ ist C₁-C₆-Alkyl und
m ist 0 oder 1.

7. Beschichtungszusammensetzung gemäß einem der Ansprüche 1 bis 6, wobei als Komponente E ein oder mehrere Di- oder Triglycidylether oder Di- oder Triglycidylester, vorzugsweise 4,4'-Isopropylidenediphenoldiglycidyl ether.

8. Beschichtungszusammensetzung gemäß einem der Ansprüche 1 bis 7, wobei als Komponente C ein verzweigter Polyesterpolyol eingesetzt wird.

9. Beschichtungszusammensetzung gemäß einem der Ansprüche 1 bis 8, wobei als Komponente D ein oder mehrere geblockte Polyisocyanate auf Basis von Isophorondiisocyanat oder Hexamethylendiisocyanat eingesetzt werden.

10. Verfahren zur Herstellung eines beschichteten Substrats, enthaltend die Schritte
a) nasschemisches Aufbringen einer Beschichtungszusammensetzung gemäß einem der Ansprüche 1 bis 9 auf das Substrat und
b) thermisches Aushärten der Beschichtungszusammensetzung.

11. Verfahren gemäß Anspruch 10, wobei die Aushärtungszeit im Bereich von 2 Minuten bis 2 Stunden liegt.

12. Verfahren gemäß Anspruch 10 oder 11, wobei das thermische Aushärten in Schritt b) bei einer Temperatur im Bereich von 80 bis 240 °C erfolgt.

13. Verfahren gemäß einem der Ansprüche 10 bis 12, wobei das Substrat ein Metall-, Glas- und Kunststoffsubstrat, insbesondere ein Aluminiumsubstrat, ist.

14. Substrat, vorzugsweise ein Metall-, Glas- und Kunststoffsubstrat, insbesondere ein Aluminiumsubstrat, beschichtet mit einer Beschichtungszusammensetzung, wie in einem der Ansprüche 1 bis 9 beschrieben.

15. Verwendung einer Beschichtungszusammensetzung wie in einem der Ansprüche 1 bis 9 beschrieben zur Beschichtung von Substraten, vorzugsweise Metall-, Glas- und Kunststoffsubstraten, insbesondere Aluminiumsubstraten.

## Claims

1. Coating composition comprising
I. an inorganic-organic hybrid material obtained from
A1. one or more partially hydrolysed alkoxysilanes of the formula (Ia),
(R¹O)ₙSiR²₃₋ₙR³ (Ia)
where the symbols and indices have the following definitions:
R¹ is C₁-C₆ alkyl or C₁-C₁₀ aryl,
R² is C₁-C₄ alkyl, C₂-C₄ alkenyl or C₂-C₄-alkynyl, C₆-C₁₀ aryl, C₆-C₁₀ aralkyl or C₆-C₁₀ alkaryl,
R³ is an epoxy-functional group and
n is 1, 2 or 3;
A2. optionally one or more partially hydrolysed alkoxysilanes of the formula (Ib),
(R⁴O)ₙSiR⁵₄₋ₙ (Ib)
where the symbols and indices have the following definitions:
R⁴ is C₁-C₆ alkyl or C₆-C₁₀ aryl,
R⁵ is C₁-C₁₀ alkyl, C₂-C₄ alkenyl or C₂-C₄ alkynyl, C₆-C₁₀ aryl, C₆-C₁₀ aralkyl or C₆-C₁₀ alkaryl, the stated radicals being optionally substituted by one or more, preferably one, amino group(s), and
n is 1, 2, 3 or 4;
B1. one or more metal alkoxides of the formula (IIa),
Ti(OR⁶)₄ (IIa)
where the symbols have the following definitions:
R⁶ is C₁-C₆ alkyl or C₆-C₁₀ aryl;
B2. optionally one or more metal alkoxides of the formula (IIb),
M^{+(4-m)}( OR⁷)₄₋ₘ (IIb)
where the symbols and indices have the following definitions:
M is a metal from main or transition group 3 or 4 with EN < 1.5 except for Ti,
R⁷ is C₁-C₆ alkyl, or C₆-C₁₀ aryl and
m is 0 or 1, preferably 1,
where the molar ratio of Si in component A1 and A2 to Ti in component B1 is 1 - 20 : 1;
C. one or more oligomeric or polymeric polyols;
D. one or more blocked, optionally modified polyisocyanates; and
E. optionally one or more monomers, oligomers and/or polymers which have one or more, preferably at least two, free epoxy groups;
II. optionally one or more colorants and
III. optionally one or more adjuvants.

2. Coating composition according to Claim 1, comprising a compound (Ia) for which the symbols and indices in the formula (Ia) have the following definitions:
R¹ is C₁-C₄ alkyl,
R³ is 3-glycidyloxypropyl and
n is 3,
preferably 3-glycidyloxypropyltrimethoxysilane and/or 3-glycidyloxypropyltriethoxysilane.

3. Coating composition according to Claim 1 or 2, comprising one or more compounds of the formula (Ib) preferably selected from the group consisting of tetraethoxysilane, methyltriethoxysilane, hexyltriethoxysilane, phenyltriethoxysilane, aminopropyltriethoxysilane and mixtures of two or more of the stated compounds.

4. Coating composition according to any of Claims 1 to 3, wherein the partial hydrolysis of the compound of the formula (I) took place in an acidic medium, preferably with addition of phosphoric acid.

5. Coating composition according to any of Claims 1 to 4, wherein the compound (IIa) is titanium tetra-n-butoxide.

6. Coating composition according to any of Claims 1 to 5, wherein the symbols and indices of the formula (IIb) have the following definitions:
M is Al, Zr, or B;
R⁷ is C₁-C₆ alkyl and
m is 0 or 1.

7. Coating composition according to any of Claims 1 to 6, wherein component E comprises one or more di- or triglycidyl ethers or di- or triglycidyl esters, preferably 4,4'-isopropylidenediphenol diglycidyl ether.

8. Coating composition according to any of Claims 1 to 7, wherein component C used comprises a branched polyester polyol.

9. Coating composition according to any of Claims 1 to 8, wherein component D used comprises one or more blocked polyisocyanates based on isophorone diisocyanate or hexamethylene diisocyanate.

10. Method for producing a coated substrate, comprising the steps of
a) wet-chemically applying a coating composition according to any of Claims 1 to 9 to the substrate, and
b) thermally curing the coating composition.

11. Method according to Claim 10, wherein the curing time is in the range from 2 minutes to 2 hours.

12. Method according to Claim 10 or 11, wherein the thermal curing in step b) takes place at a temperature in the range from 80 to 240°C.

13. Method according to any of Claims 10 to 12, wherein the substrate is a metal, glass and plastics substrate, more particularly an aluminium substrate.

14. Substrate, preferably a metal, glass and plastics substrate, more particularly an aluminium substrate, coated with a coating composition as described in any of Claims 1 to 9.

15. Use of a coating composition as described in any of Claims 1 to 9 for coating substrates, preferably metal, glass and plastics substrates, more particularly aluminium substrates.

## Revendications

1. Composition de revêtement, contenant
I. un matériau hybride inorganique-organique obtenu à partir de
A1. un ou plusieurs alcoxysilanes partiellement hydrolysés de Formule (Ia),
(R¹O)ₙSiR²₃₋ₙR³ (Ia)
dans laquelle les symboles et indices ont les significations suivantes :
R¹ représente un alkyle en C₁-C₆ ou un aryle en C₁-C₁₀,
R² représente un alkyle en C₁-C₄, un alcényle en C₂-C₄ ou un alcynyle en C₂-C₄, un aryle en C₆-C₁₀, un aralkyle en C₆-C₁₀ ou un alcaryle en C₆-C₁₀,
R³ représente un groupe à fonctionnalité époxy et
n représente 1, 2 ou 3 ;
A2. éventuellement un ou plusieurs alcoxysilanes partiellement hydrolysés de Formule (Ib),
(R¹O)ₙSiR⁵₄₋ₙ (Ib)
dans laquelle les symboles et indices ont les significations suivantes :
R⁴ représente un alkyle en C₁-C₆ ou un aryle en C₆-C₁₀,
R⁵ représente un alkyle en C₁-C₁₀, un alcényle en C₂-C₄ ou un alcynyle en C₂-C₄, un aryle en C₆-C₁₀, un aralkyle en C₆-C₁₀ ou un alcaryle en C₆-C₁₀, les radicaux mentionnés étant éventuellement substitués par un ou plusieurs, de préférence un, groupes amino et
n représente 1, 2, 3 ou 4 ;
B1. un ou plusieurs alcoxydes métalliques de Formule (IIa),
Ti(OR⁶)₄ (IIa)
dans laquelle les symboles ont les significations suivantes :
R⁶ représente un alkyle en C₁-C₆ ou un aryle en C₆-C₁₀ ;
B2. éventuellement un ou plusieurs alcoxydes métalliques de Formule (IIb),
M^{+(4-m)}(OR⁷)₄₋ₘ (IIb)
dans laquelle les symboles et indices ont les significations suivantes :
M représente un métal du 3e ou du 4e groupe principal ou secondaire avec EN < 1,5 à l'exception de Ti,
R⁷ représente un alkyle en C₁-C₆ ou un aryle en C₆-C₁₀ et
m représente 0 ou 1, de préférence 1,
le rapport en moles de Si aux composants A1 et A2 au Ti du composant B1 étant de 1-20:1 ;
C. un ou plusieurs polyols oligomères ou polymères ;
D. un ou plusieurs polyisocyanates bloqués, de préférence modifiés et
E. éventuellement un ou plusieurs monomères, oligomères et/ou polymères, qui comportent un ou plusieurs, de préférence au moins deux, groupes époxy libres ;
II. éventuellement un ou plusieurs colorants et
III. éventuellement un ou plusieurs additifs.

2. Composition de revêtement selon la revendication 1, contenant un composé (Ia), dans lequel les symboles et indices de la Formule (Ia) ont les significations suivantes :
R¹ représente un alkyle en C₁-C₄,
R³ représente un 3-glycidyloxypropyle et
n représente 3, de préférence le 3-glycidyloxypropyltriméthoxysilane et/ou le 3-glycidyloxypropyltriéthoxysilane.

3. Composition de revêtement selon la revendication 1 ou 2, contenant un ou plusieurs composés de Formule (Ib), de préférence choisis dans le groupe comprenant le tétraéthoxysilane, le méthyltriéthoxysilane, l'hexyltriéthoxysilane, le phényltriéthoxysilane, l'aminopropyltriéthoxysilane et les mélanges de deux ou plus des composés mentionnés.

4. Composition de revêtement selon l'une des revendications 1 à 3, l'hydrolyse partielle du composé de Formule (I) ayant lieu en milieu acide, de préférence avec addition d'acide phosphorique.

5. Composition de revêtement selon l'une des revendications 1 à 4, le composé (IIa) étant le tétra-(n)-butanolate de titane.

6. Composition de revêtement selon l'une des revendications 1 à 5, les symboles et indices de la Formule (IIb) ayant les significations suivantes :
M représente Al, Zr ou B ;
R⁷ représente un alkyle en C₁-C₆ et
m représente 0 ou 1.

7. Composition de revêtement selon l'une des revendications 1 à 6, le composant E étant un ou plusieurs éthers di- ou triglycidyliques ou esters di- ou triglycidyliques, de préférence l'éther diglycidylique du 4,4'-isopropylidènediphénol.

8. Composition de revêtement selon l'une des revendications 1 à 7, dans laquelle on utilise comme composant C un polyesterpolyol ramifié.

9. Composition de revêtement selon l'une des revendications 1 à 8, dans laquelle on utilise comme composant D, un ou plusieurs polyisocyanates bloqués à base de diisocyanate d'isophorone ou de diisocyanate d'hexaméthylène.

10. Procédé de préparation d'un substrat revêtu, contenant les étapes suivantes :
a) application sur le substrat, par voie chimique humide, d'une composition de revêtement selon l'une des revendications 1 à 9 et
b) durcissement thermique de la composition de revêtement.

11. Procédé selon la revendication 10, la durée du durcissement étant comprise dans la plage de 2 minutes à 2 heures.

12. Procédé selon la revendication 10 ou 11, dans lequel le durcissement thermique de l'étape b) est mis en œuvre à une température dans la plage de 80 à 240 °C.

13. Procédé selon l'une des revendications 10 à 12, dans lequel le substrat est un substrat métallique, de verre ou plastique, de préférence un substrat d'aluminium.

14. Substrat, de préférence un substrat métallique, de verre et de plastique, en particulier un substrat d'aluminium, revêtu d'une composition de revêtement telle que décrite dans l'une des revendications 1 à 9.

15. Utilisation d'une composition de revêtement telle que décrite dans l'une des revendications 1 à 9 pour revêtir des substrats, de préférence des substrats métalliques, de verre et de plastique, en particulier des substrats d'aluminium.
